(19) Europäisches Patentamt
European Patent Office
Office européen des brevets

(11) **EP 2 533 473 A1**

(12) **EUROPEAN PATENT APPLICATION**
published in accordance with Art. 153(4) EPC

(43) Date of publication:
**12.12.2012 Bulletin 2012/50**

(51) Int Cl.:
***H04L 12/56*** *(2006.01)*

(21) Application number: **10845107.1**

(22) Date of filing: **17.11.2010**

(86) International application number:
**PCT/CN2010/078820**

(87) International publication number:
**WO 2011/095024 (11.08.2011 Gazette 2011/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2010 CN 201010110814**

(71) Applicant: **ZTE Corporation**
**Shenzhen, Guangdong 518057 (CN)**

(72) Inventor: **LIU, Chunjiang**
**Shenzhen**
**Guangdong 518057 (CN)**

(74) Representative: **Tischner, Oliver**
**Lavoix Munich**
**Bayerstrasse 85a**
**80335 Munich (DE)**

(54) **METHOD AND APPARATUS FOR BIDIRECTIONAL FORWARDING DETECTION (BFD) OSCILLATION DAMPING**

(57)    The disclosure discloses a method and an apparatus for damping Bidirectional Forwarding Detection (BFD) oscillation. In the solution of the disclosure, when instant breaks occur frequently in a link, a Line Process (LP) calculates a penalty value by using an oscillation damping algorithm, and causes a BFD session to enter a damped state under a corresponding condition; after the link recovers from failure, the Line ProcessLP causes the BDF session to exit the damped state under a corresponding condition. By means of the method and the apparatus of the disclosure, the problem that services are interrupted caused by squeezing a Stream Control Transmission Protocol (SCTP) buffer continuously when instant breaks occur frequently in a link can be solved, so that the services can be transmitted through other normal links, the interruption of the entire services can be avoided, and thus the transmission of the entire upper layer services can be ensured.

Fig. 2

A BFD process in the RP is initialized, and a corresponding configuration is performed on the BFD process in the RP through network management — 201

The BFD process in the RP commands a BFD process in the LP to establish a BFD session — 202

A link state is detected by a probe packet — 203

The LP1 determines whether a penalty value is greater than a suppress threshold — 204 — No / Yes

The BFD session on the LP1 is caused to enter the damped state and the BFD process in the RP is notified — 204

The LP1 determines whether the penalty value is less than a re-enabling value — 205 — Yes / No

The BFD process in the LP1 notifies the BFD process in the RP to cause the BFD session to exit the damped state, and the BFD process in the RP clears the damping flag of the BFD session and validates the IP1-IP3 link — 206

The BFD session is still in the damped state, and the IP1-IP3 link is still in an invalid state — 207

**Description**

TECHNICAL FIELD

The disclosure relates to a Bidirectional Forwarding Detection (BFD) technology, and specifically to a method and an apparatus for damping bidirectional forwarding detection oscillation.

BACKGROUND

BFD is a protocol proposed by Internet Engineering Task Force (IETF) which is one of the International Organization for Standardization, and is used for rapidly detecting a failure on forwarding paths in an Ethernet. The above forwarding paths include: direct physical links, virtual circuits, tunnels, multi-hop channels, indirectly connected channels and the like. The BFD provides a uniform failure detection method for a network administrator, so that the network administrator can detect forwarding path failures at a uniform rate, which not only causes network re-convergence time to be consistent and predictable, but also causes network profiling and planning easier. Implementation of failure detection by the BFD can assist an Internet Protocol (IP) network in implementing transmission of voices, videos and other services on demand with good Quality of Service (QOS) to assist a service provider in providing IP network-based service, and thus to provide the service provider with highly reliable and applicable Voice over Internet Protocols (VoIPs) and other real-time services.

The BFD activates and maintains a BFD session by sending a BFD probe packet between both systems, and therefore, in order to establish a BFD session, it is necessary to configure the BFD session in both equivalent systems. Once the BFD session is established successfully and a negotiation is completed, the both systems running the BFD session send the BFD probe packet in the same manner, when one link between the both systems fails, the both systems detect a link failure through the BFD probe packet and report the link failure to various application modules which perform probe by using the BFD probe packet, such as routing modules, and the application modules take a corresponding measure to bypass a path where a transmission failure occurs, so as to avoid service interruption.

As a 3rd Generation (3G) network element equipment is borne by more and more IP networks, in recent years, with the development of the VoIP, transferring signaling and voice over the IP networks has become inevitable. A Stream Control Transmission Protocol (SCTP), which is a new generation transmission protocol of IP networks, is a basis on which an IP network transmits voice service. The SCTP protocol enables a signaling message to be transmitted over an IP-based public packet switching network, and to execute traffic control and error control end-to-end, thus it has been a critical problem on how to transmit the signaling over the IP networks, but signaling transmission requires high reliability and low delay. Accordingly, the SCTP introduces multi-homing as compared to a Transmission Control Protocol (TCP). So-called multi-homing means that one SCTP end point is reachable through a plurality of IP addresses, so that data can be transmitted through different physical links after two SCTP end points are associated with each other.

The 3G network element equipment bears signaling by using the SCTP when transmitting the signaling over the IP networks, usually in order to apply using multi-homing properties, the SCTP is caused to take different physical paths to achieve mutual backup. Usually when a static route is configured, a load balancing networking mode is implemented by a way that a plurality of equivalent next hop IP static routes are configured in the same destination IP address, while a validity detection of a next hop of each static route is performed by using the BFD. Such a networking mode can cause, when a plurality of load-balanced paths are normal, STCP-borne signaling service capable of being distributed to the plurality of paths evenly by effectively utilizing bandwidths of the plurality of paths. If one of paths fails, the BFD can normally detect the failure and perform corresponding validity processing on the route, the SCTP will lose a small number of messages during a delayed time between an actual link disconnecting time point and a link disconnecting time point detected by the BFD, but since the SCTP as a transmission layer protocol has its own retransmission mechanism, signaling service can still be sent through other normal backup paths, when the BFD detects that the failed path recovers to normal, the signaling service can be re-sent through the path.

However, there is a large drawback in the above networking, that is, if instant breaks occur frequently in the failed path, i.e., the path is sometimes normal and sometimes fails, since there is always a certain time interval delay between the link disconnecting time point detected by the BFD and the actual link disconnecting time point, if instant breaks occur frequently in the link, the BFD will detect link disconnection and recovery continuously, frequently instant breaks in the link causes continuous accumulation of lost messages, and the retransmission mechanism of SCTP causes an SCTP buffer to be continuously squeezed. In this way, as time goes by, data packets cannot be sent to the buffer any more after the buffer is squeezed to a certain extent, even though other links are normal, all services will be interrupted due to instant break of one link, thereby influencing the transmission of the entire upper layer services.

**SUMMARY**

In view of the problem above, the main purpose of the disclosure is to provide a method and an apparatus for damping Bidirectional Forwarding Detection (BFD) oscillation, so as to solve the problem that services are interrupted caused by squeezing an SCTP buffer continuously when instant breaks occur frequently in one link.

In order to solve the above technical problem, the technical solution of the disclosure is implemented as follows.

A method for damping bidirectional forwarding detection oscillation is provided, which includes: when instant breaks occur frequently in a link, a Line Process (LP) calculates a penalty value by using an oscillation damping algorithm, and causes a BFD session to enter a damped state under a corresponding condition; and after the link recovers from failure, the LP causes the BDF session to exit the damped state under a corresponding condition.

Preferably, the calculating the penalty value by using the oscillation damping algorithm may include: each time the link fails, the penalty value is increased; and when the link recovers from failure, the penalty value is attenuated according to an equation

$$p(t) = p(t_0)e^{-\lambda(t-t_0)}$$, wherein $\lambda$ is calculated by using an equation H=ln2/$\lambda$, where H is a half-life.

Preferably, the causing the BFD session to enter the damped state under the corresponding condition may include: when the penalty value is greater than a set suppress threshold, a BFD process in the LP causes the BFD session to enter the damped state and notifies a BFD process in a Route Process (RP); otherwise, continues to probe the link by using a probe packet; and/or preferably, the causing the BDF session to exit the damped state under a corresponding condition may include that: after the link recovers from failure and the link gets into a steady state, when the penalty value is attenuated to be less than a re-enabling value, a BFD process in the LP causes the BFD session to exit the damped state and notifies a BFD process in a RP; otherwise, the BFD session is still in the damped state even though the link recovers from failure.

The method may further include: after the BFD process in the RP receives a notification of causing the BFD session to enter the damped state, the BFD process in the RP sets a damping flag of the BFD session; and/or after the BFD process in the RP receives a notification of causing the BFD session to exit the damped state, the BFD process in the RP clears the damping flag of the BFD session.

Before the link oscillates frequently, the method may further include: initializing the BFD process in the RP, and configuring a static route from a source address to a destination address, and a message sending time interval, a message receiving time interval, a single-hop mode and an oscillation damping enabling parameter for the BFD session.

After the initializing and configuring, the method may further include: the BFD process in the RP sends a BFD session establishment command to the BFD process in the LP, and the BFD process in the LP parses a parameter in the BFD session establishment command and establishes the BFD session.

In another aspect, an apparatus for damping Bidirectional Forwarding Detection (BFD) oscillation is provided, which includes:

an oscillation damping algorithm module located on an LP and configured to, when instant breaks occur frequently in a link, calculate a penalty value by using an oscillation damping algorithm, and cause a BFD session to enter a damped state under a corresponding condition; and after the link recovers from failure, cause the BDF session to exit the damped state under a corresponding condition.

Preferably, the calculating the penalty value by using the oscillation damping algorithm may include: each time the link fails, the penalty value is increased; when the link recovers from failure, the penalty value is attenuated according to an equation

$$p(t) = p(t_0)e^{-\lambda(t-t_0)}$$, wherein $\lambda$ is calculated by using an equation H=ln2/$\lambda$, where H is a half-life.

Preferably, the causing the BFD session to enter the damped state under the corresponding condition may include: when the penalty value is greater than a set suppress threshold, notifying a BFD process module on the LP to cause the BFD session to enter the damped state and notifying the BFD process module on a Route Process (RP); otherwise, continuing to detect the link by using a probe packet; and/or

preferably, the causing the BFD session to exit the damped state under the corresponding condition may include: after the link recovers from failure and the link gets into a steady state, when the penalty value is attenuated to be less than a re-enabling value, notifying a BFD process module on the LP to cause the BFD session to exit the damped state and notifying a BFD process module on the RP; otherwise, the BFD session is still in the damped state even though the link recovers from failure.

The apparatus may further include: the BFD process module on the RP and the BFD process module on the LP, wherein

the BFD process module on the RP may be configured to send a BFD session establishment and deletion command, and further configured to store relevant configurations and parameters of the BFD session and a registered application module identifier; and

the BFD process module on the LP may be configured to parse the parameters in the BFD session establishment and deletion command from the BFD process module on the RP, and establish and delete the BFD session according to the BFD session establishment and deletion command, and further configured to send a notification of causing the BFD session to enter or exit the damped state to the BFD process module on the RP.

The BFD process module on the RP may further be configured to set or clear a damping flag of the BFD session according to the notification of causing the BFD session to enter or exit the damped state.

The apparatus may further include: an initialization configuration module on the RP configured to initialize the BFD process module and configure a message sending time interval, a message receiving time interval, a single-hop mode and an oscillation damping enabling parameter for the BFD session from a source address to a destination address, and a static route in which the BFD session is used.

According to the method and the apparatus provided by the disclosure, when instant breaks occur frequently in a link, an LP calculates a penalty value by using an oscillation damping algorithm, and causes a BFD session to enter a damped state under a corresponding condition; and after the link recovers from failure, the LP causes the BDF session to exit the damped state under a corresponding condition; in this way, the problem that when instant breaks occur frequently in a link services are interrupted caused by squeezing the SCTP buffer continuously can be solved, so that the services can be transmitted through other normal links, the interruption of the entire services can be avoided, and thus the transmission of the entire upper layer services can be ensured.

**BRIEF DESCRIPTION OF THE DRAWINGS**

Fig. 1 is a topology diagram of a network in one embodiment of the disclosure;

Fig. 2 is a flowchart of a method for bidirectional forwarding detection oscillation damping according to the disclosure;

Fig. 3 is a curve illustrating penalty value increase and attenuation by an oscillation damping algorithm according to the disclosure; and

Fig. 4 is a composition diagram of an apparatus for bidirectional forwarding detection oscillation damping according to the disclosure.

**DETAILED DESCRIPTION**

The main idea of the disclosure is that: when instant breaks occur frequently in a link, an LP calculates a penalty value by using an oscillation damping algorithm, and determines whether a BFD session gets into a damped state under a corresponding condition; and after the BFD session gets into the damped state, the LP determines whether the BDF gets to exit the damped state under a corresponding condition.

The method of the disclosure will be described in detail by way of specific embodiments hereinafter.

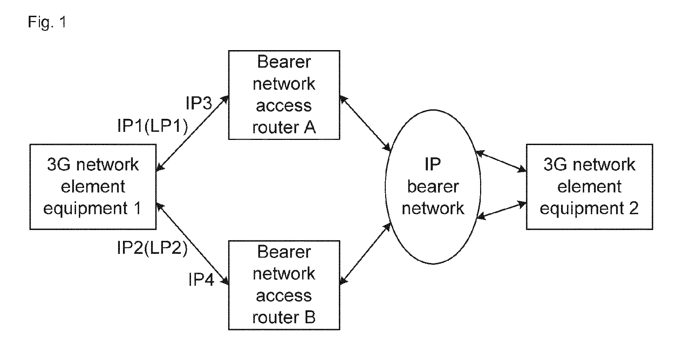

The method for bidirectional forwarding detection oscillation damping provided by the disclosure is commonly implemented by a distributed architecture, i.e., commonly implemented by a RP and an LP. Wherein, the RP and the LP are located in a network element equipment and possess respective BFD processes corresponding to the same BFD session, the BFD process in the RP sends a BFD session establishment or deletion command to the BFD process in the corresponding LP, and different LPs can be connected to different Internet Protocol (IP) bearer network access routers, a network topology of which is as shown in Fig. 1, wherein an address of an LP1 is expressed as IP1 and an address of an LP2 is expressed as IP2.

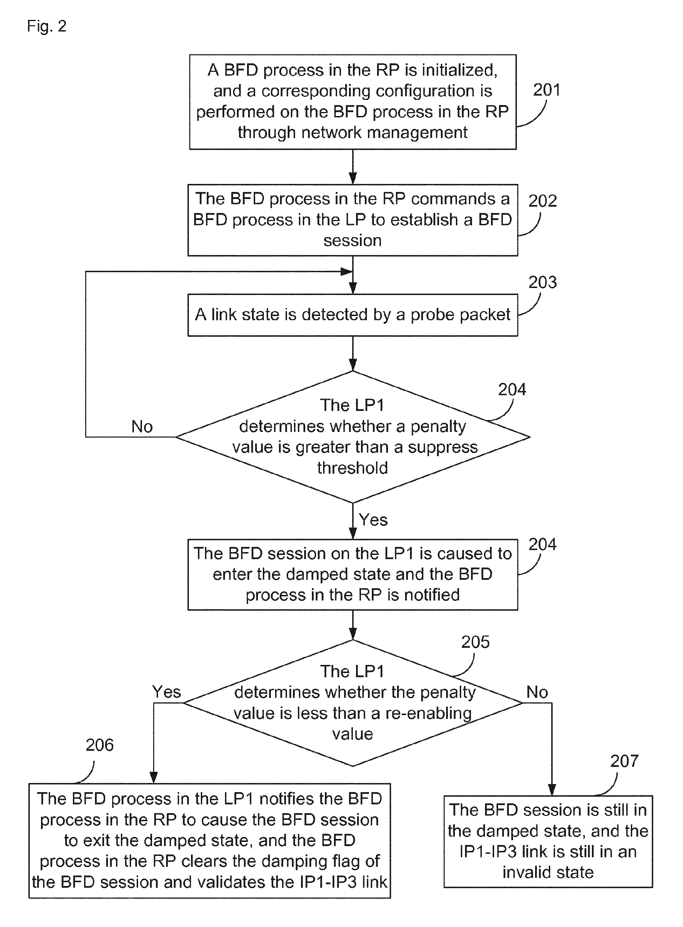

As shown in Fig. 2, the method provided by the disclosure includes the following steps.

Step 201: a BFD process in a RP is initialized, and a corresponding configuration is performed on the BFD process in the RP through network management; in this step, when a 3G network element equipment is powered on, the BFD process in the RP is initialized, which includes: distribution of storage space required by BFD session management, registration of an application module (such as a static route module) performing detection by using a BFD session and the like.

The corresponding configuration is performed through the network management includes: firstly, a user configures a remote 3G network element equipment 2 as a static route of a destination address through a network management in a 3G network element equipment 1, respectively configures next hop addresses of an address IP1 and an address IP2 as an address IP3 and an address IP4, and initiates a BFD detection function of the application module to enable the RP to receive a BFD session request created by the application module; here, BFD session paths are created for the BFD session from a source IP address on the LP1 of the 3G network element equipment 1 (i.e., the IP1) to a destination IP address of an IP bearer network access router A (i.e., the IP3), and from a source IP address on the LP2 of the 3G network element equipment 1 (i.e., the IP2) to a destination IP address of an IP bearer network access router B (i.e., the IP4), i.e., an IP1-IP3 link and an IP2-IP4 link. Next, the user configures, through the network management, a message sending time interval, a message receiving time interval, a single-hop mode, an oscillation damping enabling parameter and other parameters for the BFD session of the IP1-IP3 link and the IP2-IP4 link.

Step 202: the BFD process in the RP commands a BFD process in an LP to establish a BFD session; in this step, the BFD process in the RP stores relevant configurations and parameters of the above BFD session and a registered application module identifier, finds the corresponding LP according to the source IP address of the session, and sends a BFD session establishment command to the corresponding LP1 and LP2 respectively, wherein the BFD session establishment command contains a message sending time interval, a message receiving time interval, an oscillation damping enabling parameter and other parameters for the BFD session.

The BFD processes on the LP1 and LP2, after respectively receiving the BFD session establishment command, parse the parameters contained in the BFD session establishment command, establish corresponding BFD sessions respectively between the links from the LP1 to the access router A and from the LP2 to the access router B, i.e., the BFD sessions between the IP1-IP3 link and the IP2-IP4 link, and store the parameters contained in the BFD session establishment command in the two BFD sessions for subsequent session negotiation.

Step 203: a link state is detected by a probe packet;

in this step, when the IP1-IP3 links and the IP2-IP4 links are normal, the two BFD sessions successfully negotiate with the access router A and the access router B respectively, and detect the states of the IP1-IP3 link and the IP2-IP4 link by the probe packet, when the links fail, the state of the BFD session is Down, when the links are normal, the state of the BFD session is UP.

Step 204: the LP1 determines whether a penalty value is greater than a suppress threshold, if yes, causes the BFD session on the LP1 to enter a damped state and notifies the BFD process in the RP, then Step 205 is executed; otherwise, Step 203 is returned to continue to detect the link state;

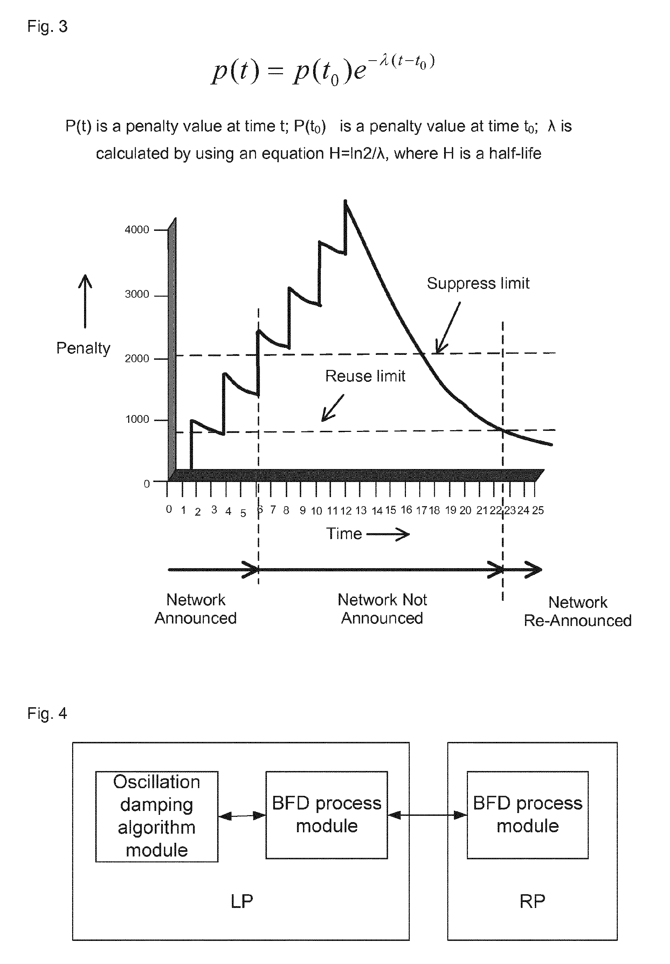

in this step, assume that when the IP1-IP3 link fail, the state of the BFD session in the BFD process in the LP1 is changed into Down, if the BFD session is configured with an oscillation damping parameter, the LP1 calculates the penalty value by a damping algorithm, as shown in Fig. 3, within a given period, each time the link fails, the penalty value is increased, wherein increment of the penalty value can be set according to a specific condition; when the link recovers from failure, the penalty value is attenuated according to an equation

$$p(t) = p(t_0)e^{-\lambda(t-t_0)},$$ wherein $\lambda$ is calculated by using

an equation $H=\ln 2/\lambda$, where H is a half-life and can be set according to an actual situation; when instant breaks occur frequently in the link, i.e., the link oscillates, the penalty value continues to be increased. When the penalty value is greater than a set suppress threshold, the BFD process in the LP1 causes the BFD session to enter the damped state, and notifies the BFD process in the RP; and the BFD process in the RP finds the corresponding BFD session after receiving the notification, if the BFD session is not in the damped state, updates the state of the BFD session to Down, and sets the damping flag of the BFD session to cause the BFD session in the damped state; wherein the suppress threshold can be set according to a specific condition.

Step 205: the LP1 determines whether the penalty value is less than a re-enabling value, if yes, Step 206 is executed; otherwise, Step 207 is executed;

in this step, when the BFD session gets into the damped state, if the recovery of link failure is detected by a probe packet, the penalty value is attenuated with time, the BFD process in the LP1 notifies the BFD process in the RP to update the state of the BFD session to UP, when the penalty value is attenuated to be less than the re-enabling value, Step 206 is executed; otherwise, Step 207 is executed; wherein the re-enabling value can be set according to a specific condition.

Step 206: the BFD process in the LP1 notifies the BFD process in the RP to cause the BFD session to exit the damped state, and the BFD process in the RP clears the damping flag of the BFD session and validates the IP1-IP3 link;

in this step, when the penalty value is attenuated to be less than the re-enabling value, it shows that the link recovers from failure and the link gets into a steady state, the BFD process in the LP1 causes the BFD session to exit the damped state and notifies the BFD process in the RP; after receiving the notification, the BFD process in the RP clears the damping flag of the BFD session and notifies a registered application module to enable a service to be normally re-transmitted through the IP1-IP3 link, so as to validate the IP1-IP3 link.

Step 207: the BFD session is still in the damped state, and the IP1-IP3 link is still in an invalid state.

In this step, when the penalty value is greater than the re-enabling value, it shows that the link does not recover to the steady state, the BFD session is still in the damped state, even though the state of the BFD session is changed into UP, the BFD process in the RP does not notify the registered application module of the change in state, the IP1-IP3 link is still in an invalid state, a service cannot be transmitted through the link, but at the moment, a service can be transmitted via the IP2-IP4 link, so no blocking occurs due to packet loss.

Based on the above method, the disclosure further provides an apparatus for damping bidirectional forwarding detection oscillation is provided, as shown in Fig. 4, which includes:

an oscillation damping algorithm module located on an LP and configured to, when instant breaks occur frequently in a link, calculate a penalty value by using an oscillation damping algorithm, and cause a BFD session to enter a damped state under a corresponding condition; and after the link recovers from failure, cause the BDF session to exit the damped state according a the corresponding condition.

The calculating the penalty value by using the oscillation damping algorithm includes: each time the link fails, the penalty value is increased; and when the link recovers from failure, the penalty value is attenuated according to an equation $p(t) = p(t_0)e^{-\lambda(t-t_0)}$, wherein $\lambda$ is calculated by using an equation $H=\ln 2/\lambda$, where H

is a half-life and can be set according to an actual situation.

The causing the BFD session to enter the damped state under the corresponding condition specifically includes: as the link oscillates, the penalty value continues to increase, when the penalty value is greater than the set suppress threshold, notifying the BFD process module on the LP to cause the BFD session to enter the damped state; and

the causing the BFD session to exit the damped state under the corresponding condition specifically includes: after the link recovers from failure and the link gets into the steady state, when the penalty value is attenuated to be less than a re-enabling value, notifying a BFD process module on the LP to cause the BFD session to exit the damped state.

In the above solution, the apparatus further includes: the BFD process module on the RP and the BFD process module on the LP, wherein

the BFD process module on the RP is configured to send a BFD session establishment and deletion command, and further configured to store relevant configurations and parameters of the BFD session and a registered application module identifier; and

the BFD process module on the LP is configured to parse the parameters in the BFD session establishment and deletion command from the BFD process module on the RP, and establish and delete the BFD session according to the BFD session establishment and deletion command, and further configured to send a notification of causing the BFD session to enter or exit the damped state to the BFD process module on the RP.

The BFD process module on the RP is further configured to set or clear a damping flag of the BFD session according to the notification of causing the BFD session to enter or exit the damped state.

The apparatus further includes: an initialization configuration module on the RP configured to initialize the BFD process module and configure a message sending time interval, a message receiving time interval, a single-hop mode and an oscillation damping enabling parameter for the BFD session from a source address to a destination address, and a static route in which the BFD session is used.

The above are only the preferred embodiments of the disclosure and are not intended to limit the scope of protection of the disclosure. Any modification, equivalent replacement, improvement and the like within the spirit and principle of the disclosure shall fall within the scope of protection of the disclosure.

**Claims**

1. A method for damping Bidirectional Forwarding Detection (BFD) oscillation, comprising:

    when instant breaks occur frequently in a link, calculating, by a Line Process (LP), a penalty value by using an oscillation damping algorithm, and causing a BFD session to enter a damped state under a corresponding condition; and
    after the link recovers from failure, causing, by the LP, the BDF session to exit the damped state under a corresponding condition.

2. The method according to claim 1, wherein the calculating the penalty value by using the oscillation damping algorithm comprises: each time the link fails, increasing the penalty value; when the link recovers from failure, attenuating the penalty value according to an equation $p(t) = p(t_0)e^{-\lambda(t-t_0)}$,

    wherein $\lambda$ is calculated by using an equation H=ln2/$\lambda$, where H is a half-life.

3. The method according to claim 1, wherein,
    the causing the BFD session to enter the damped state under the corresponding condition comprises: when the penalty value is greater than a set suppress threshold, causing, by a BFD process in the LP, the BFD session to enter the damped state and notifying a BFD process in a Route Process (RP); otherwise, continuing to probe the link by using a probe packet; and/or
    the causing the BDF session to exit the damped state under the corresponding condition comprises: after the link recovers from failure and the link gets into a steady state, when the penalty value is attenuated to be less than a re-enabling value, causing, by a BFD process in the LP, the BFD session to exit the damped state and notifying a BFD process in a RP; otherwise, the BFD session is still in the damped state even though the link recovers from failure.

4. The method according to claim 3, further comprising:

    after the BFD process in the RP receives a notification of causing the BFD session to enter the damped state, setting, by the BFD process in the RP, a damping flag of the BFD session; and/or
    after the BFD process in the RP receives a notification of causing the BFD session to exit the damped state, clearing, by the BFD process in the RP, the damping flag of the BFD session.

5. The method according to any one of claims 1 to 4, wherein the method further comprises: before the link oscillates frequently, initializing the BFD process in the RP, and configuring a static route from a source address to a destination address, and a message sending time interval, a message receiving time interval, a single-hop mode and an oscillation damping enabling parameter for the BFD session.

**6.** The method according to claim 5, wherein the method further comprises:

after the initializing and configuring, sending, by the BFD process in the RP, a BFD session establishment command to the BFD process in the LP, and parsing, by the BFD process in the LP, a parameter in the BFD session establishment command and establishing the BFD session.

**7.** An apparatus for damping Bidirectional Forwarding Detection (BFD) oscillation, comprising:

an oscillation damping algorithm module located on an Line Process (LP) and configured to, when instant breaks occur frequently in a link, calculate a penalty value by using an oscillation damping algorithm, and cause a BFD session to enter a damped state under a corresponding condition; and after the link recovers from failure, cause the BDF session to exit the damped state under a corresponding condition.

**8.** The apparatus according to claim 7, wherein the calculating the penalty value by using the oscillation damping algorithm comprises: each time the link fails, increasing the penalty value; when the link recovers from failure, attenuating the penalty value according to an equation $p(t) = p(t_0)e^{-\lambda(t-t_0)}$ ,

wherein $\lambda$ is calculated by using an equation H=ln2/$\lambda$, where H is a half-life.

**9.** The apparatus according to claim 7, wherein,
the causing the BFD session to enter the damped state under the corresponding condition comprises: when the penalty value is greater than a set suppress threshold, notifying a BFD process module on the LP to cause the BFD session to enter the damped state and notifying a BFD process module on a Routing Process (RP); otherwise, continuing to detect the link by using a probe packet; and/or
the causing the BFD session to exit the damped state under the corresponding condition comprises: after the link recovers from failure and the link gets into a steady state, when the penalty value is attenuated to be less than a re-enabling value, notifying a BFD process module on the LP to cause the BFD session to exit the damped state and notifying a BFD process module on the RP; otherwise, the BFD session is still in the damped state even though the link recovers from failure.

**10.** The apparatus according to claim 7, wherein the apparatus further comprises: the BFD process module on the RP and the BFD process module on the LP, wherein

the BFD process module on the RP is configured to send a BFD session establishment and deletion command, and further configured to store relevant configurations and parameters of the BFD session and a registered application module identifier; and the BFD process module on the LP is configured to parse the parameters in the BFD session establishment and deletion command from the BFD process module on the RP, and establish and delete the BFD session according to the BFD session establishment and deletion command, and further configured to send a notification of causing the BFD session to enter or exit the damped state to the BFD process module on the RP.

**11.** The apparatus according to claim 10, wherein the BFD process module on the RP is further configured to set or clear a damping flag of the BFD session according to the notification of causing the BFD session to enter or exit the damped state.

**12.** The apparatus according to any one of claims 7 to 11, wherein the apparatus further comprises: an initialization configuration module on the RP configured to initialize the BFD process module and configure a message sending time interval, a message receiving time interval, a single-hop mode and an oscillation damping enabling parameter for the BFD session from a source address to a destination address, and a static route in which the BFD session is used.

Fig. 1

Fig. 2

```
┌─────────────────────────────────┐
│ A BFD process in the RP is       │      201
│ initialized, and a corresponding │
│ configuration is performed on    │
│ the BFD process in the RP        │
│ through network management       │
└─────────────────────────────────┘
                │
                ▼
┌─────────────────────────────────┐
│ The BFD process in the RP        │      202
│ commands a BFD process in the    │
│ LP to establish a BFD session    │
└─────────────────────────────────┘
                │
                ▼
┌─────────────────────────────────┐      203
│ A link state is detected by a    │
│ probe packet                     │
└─────────────────────────────────┘
                │
                ▼
           The LP1                        204
      determines whether a penalty  ──No──
      value is greater than a suppress
           threshold
                │
               Yes
                │
                ▼
┌─────────────────────────────────┐      204
│ The BFD session on the LP1 is    │
│ caused to enter the damped state │
│ and the BFD process in the RP    │
│ is notified                      │
└─────────────────────────────────┘
                │
                ▼
           The LP1                        205
  Yes── determines whether the penalty ──No
        value is less than a re-enabling
           value
```

206

The BFD process in the LP1 notifies the BFD process in the RP to cause the BFD session to exit the damped state, and the BFD process in the RP clears the damping flag of the BFD session and validates the IP1-IP3 link

207

The BFD session is still in the damped state, and the IP1-IP3 link is still in an invalid state

Fig. 3

$$p(t) = p(t_0)e^{-\lambda(t-t_0)}$$

P(t) is a penalty value at time t; P($t_0$)　is a penalty value at time $t_0$;　$\lambda$ is calculated by using an equation H=ln2/$\lambda$, where H is a half-life

Fig. 4

# INTERNATIONAL SEARCH REPORT

| International application No. |
|---|
| PCT/CN2010/078820 |

### A. CLASSIFICATION OF SUBJECT MATTER

H04L 12/56 (2006.01) i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CPRSABS, CNKI, EPODOC, WPI: bidirectional forwarding, detect+, BFD, damp+, oscillat+, penalty, suppress, switch, state?

### C. DOCUMENTS CONSIDERED TO BE RELEVANT

| Category* | Citation of document, with indication, where appropriate, of the relevant passages | Relevant to claim No. |
|---|---|---|
| PX | CN101800673A (ZTE CORP) 11 Aug. 2010 （11.08.2010）　Claims 1-12 | 1-12 |
| X | CN101483592A(ZTE CORP) 15 July 2009 （15.07.2009） the description page 5 lines 24-27, page 6 lines 1-4, page 9 lines 14-15, page 10 lines 16-17 | 1, 7 |
| A | CN101043386A (HUAWEI TECHNOLOGIES CO LTD) 26 Sept. 2007 (26.09.2007) The whole document | 1-12 |
| A | CN101075921A (HUAWEI TECHNOLOGIES CO LTD) 21Nov. 2007 (21.11.2007) The whole document | 1-12 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim (S) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 15 Feb. 2011 (15.02.2011) | **24 Feb. 2011 (24.02.2011)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | MAO, Yunnan Telephone No. (86-10)62412004 |

Form PCT/ISA /210 (second sheet) (July 2009)

**INTERNATIONAL SEARCH REPORT**
Information on patent family members

| | International application No. |
|---|---|
| | PCT/CN2010/078820 |

| Patent Documents referred in the Report | Publication Date | Patent Family | Publication Date |
|---|---|---|---|
| CN101800673A | 11.08.2010 | None | |
| CN101483592A | 15.07.2009 | None | |
| CN101043386A | 26.09.2007 | WO2008003213A1 | 10.01.2008 |
| | | CN100459531C | 04.02.2009 |
| CN101075921A | 21.11.2007 | CN100558057C | 04.11.2009 |

Form PCT/ISA /210 (patent family annex) (July 2009)